# EUROPÄISCHE PATENTSCHRIFT

(11) **EP 3 574 808 B1**
(45) Veröffentlichungstag und Bekanntmachung des Hinweises auf die Patenterteilung: **23.06.2021**
(21) Anmeldenummer: 19176472.9
(22) Anmeldetag: 24.05.2019
(51) Int. Cl.: A47J 31/08, A47J 31/06

(54) **FILTERPAPIEREINSATZ UND FILTERGEFÄSS MIT EINEM FILTERPAPIEREINSATZ**
FILTER PAPER INSERT AND FILTER CONTAINER WITH A FILTER PAPER INSERT
INSERT FILTRANT EN PAPIER ET RÉCIPIENT FILTRANT DOTÉ D'UN INSERT FILTRANT EN PAPIER

(30) Priorität: 30.05.2018 DE 202018103061 U
(43) Veröffentlichungstag der Anmeldung: 04.12.2019
(73) Patentinhaber: Melitta Europa GmbH & Co. KG, 32427 Minden (DE)
(72) Erfinder: SACHTLEBEN, Andreas, 32427 Minden (DE)
(74) Vertreter: Dantz, Jan Henning

(56) Entgegenhaltungen:
- EP-A1- 3 289 935
- DE-T2- 69 106 137
- JP-A- H08 154 835

## Beschreibung

Die vorliegende Erfindung betrifft einen Filterpapiereinsatz zur Herstellung eines Brühgetränks, mit einer ersten Seitenwand und einer zweiten Seitenwand, die an gegenüberliegenden Seiten jeweils durch eine Naht oder eine Faltkante miteinander verbunden sind, und die über eine Bodennaht miteinander verbunden sind, wobei gegenüberliegend zu der Bodennaht eine Öffnung zur Befüllung des Filterpapiereinsatzes ausgebildet ist, und ein Filtergefäß mit einem Filterpapiereinsatz, wobei die Bodennaht eine von einer Geraden abweichende Form besitzt.

Aus der EP 2 793 662 B1 ist ein Filterpapiereinsatz bekannt, der zwei Seitenwände aufweist, die an einem Boden über eine gerade Bodennaht und an gegenüberliegenden Seiten über eine Naht oder eine Faltkante miteinander verbunden sind. In dem Filterpapiereinsatz sind Schlitze ausgebildet, die eine größere Menge an Ölen als Geschmacksträger beim Brühvorgang durchlassen und somit den Geschmack des Kaffees verbessern. Bei solchen Filterpapiereinsätzen wird das im Filterpapiereinsatz eingefüllte Kaffeebett mit heißem Wasser übergossen, um lösliche Bestandteile des gemahlenen Kaffees zu extrahieren. Das Filterpapier ist durchlässig für die Flüssigkeit und kann im Bodenbereich zu einer Auslassöffnung an einem Filtergefäß strömen. Der überwiegende Teil des Kaffees fließt dabei über den Bodenbereich des Filterpapiereinsatzes ab, wobei an dem Boden des Filtergefäßes meist eine mittige Öffnung vorgesehen ist. Dies führt dazu, dass die Flüssigkeit im Wesentlichen zentral durch den Filterpapiereinsatz nach unten strömt, zumindest strömt die Flüssigkeit in einem mittleren Bereich mit höherer Geschwindigkeit als in den Randbereichen, was zu einer Überextraktion des Kaffees im mittleren Bereich führt, während die Randbereiche weniger extrahiert werden.

Um dieses bekannte Problem der ungleichmäßigen Extraktion zu verbessern, wurde in der EP 3 289 935 A1 ein Filtergefäß vorgeschlagen, das im Bodenbereich zwei etwa gleich große Ablaufräume aufweist, die voneinander unterteilt sind, so dass die Flüssigkeit durch zwei voneinander beabstandete Ablaufräume abgeleitet wird. Dies vergleichmäßigt die Extraktion des Kaffeemehls. Allerdings sind sehr viele Filterbehälter bei bestehenden Kaffeemaschinen nur mit einem Ablaufloch ausgerüstet.

In der DE 691 06 137 T2 ist ein Verfahren zur Herstellung von Filterbeuteln aus Filterpapier offenbart, bei dem die Filterbeutel eine gekrümmt Bodennaht aufweisen können, um den Materialeinsatz bei der Herstellung gering zu halten. Die Krümmung ist allerdings so gering, dass sie keinen Einfluss auf das Ablaufverhalten bei der Herstellung eines Brühgetränkes hat.

Es ist daher Aufgabe der vorliegenden Erfindung, einen Filterpapiereinsatz zur Herstellung eines Brühgetränks zu schaffen, der eine gleichmäßigere Extraktion eines Extraktionsmaterials bewirkt.

Diese Aufgabe wird mit einem Filterpapiereinsatz mit den Merkmalen des Anspruches 1 gelöst.

Bei dem erfindungsgemäßen Filterpapiereinsatz sind zwei Seitenwände im unteren Bereich über eine Bodennaht miteinander verbunden, die eine von einer Geraden abweichende Form besitzt, also die Verbindung zwischen den beiden Seitenwänden durch die Bodennaht ist keine gerade Linie oder gerader Streifen. Dadurch wird vermieden, dass sich eine nicht vorhersagbare und nicht reproduzierbare Durchströmung des Kaffeemehles ergibt. Die erfindungsgemäße Gestaltung der Bodennaht führt dazu, dass das Wasser gleichmäßiger durch definierte Auslaufbereiche des Filterpapiereinsatzes strömt. Der Filterpapiereinsatz wird beim Brühen nicht vorrangig mittig durchströmt, sondern kann durch die Gestaltung der Bodennaht im unteren Bereich auch außerhalb des mittigen Bereichs verstärkt durchströmt werden. Hierfür wird der Vorteil genutzt, dass bei einer nicht geraden Bodennaht sich unterschiedliche Höhenbereiche ergeben, die für eine gleichmäßigere Durchströmung auch im nicht zentralen Bereich des Filterpapiereinsatzes sorgen.

Erfindungsgemäß sind an der Bodennaht in einer Brühposition mindestens zwei tiefere Abläufe und ein die mindestens zwei Abläufe verbindendes höhergelegenes sattelartiges Verbindungsstück ausgebildet. Hierfür wird dann der Vorteil genutzt, dass sich bei geöffnetem Filterpapiereinsatz im mittleren Bereich der Bodennaht ein sattelförmiger Bereich ausbildet, von dem aus die Wände des Filterpapiereinsatzes zu den Spitzen abfallen. Die sich dadurch bei geöffnetem Filterpapiereinsatz bildenden Ablauftrichter führen zu einem gerichteten, reproduzierbaren Ablauf des Extraktionsmittels durch das Kaffeemehl. Die mindestens zwei tieferen Abläufe werden dann stärker durchströmt als das höhergelegene Verbindungsstück, was die Extraktion verbessert, da ein Ausströmen an den mindestens zwei tieferen Abläufen in verstärktem Umfang erfolgt.

Die Abläufe sind dabei nach unten spitz zulaufend und trichterförmig ausgebildet. Optional können dies exakten Kegel ausbilden. Die Abläufe sind durch die tiefere Anordnung gegenüber dem höhergelegenen Verbindungsstück stärker durchströmt und vergrößern somit auch die stärker durchströmten Bereiche verglichen mit einem Filterpapiereinsatz mit einer horizontalen Bodennaht.

Die Bodennaht ist bevorzugt durch zwei gleichschenklige Geraden gebildet, die in einem nach unten offenen Winkel zueinander angeordnet sind. Wird der Filterpapiereinsatz in einen Filterträger eingesetzt formt sich am Scheitelpunkt des Winkels, gebildet durch die Seitenwände, eine sattelartige Struktur. Von diesem Sattel fallen die Seitenwände zur Auslaufspitze ab.

Die Bodennaht ist vorzugsweise symmetrisch zu einer Mittelebene ausgebildet.

Ferner kann die Bodennaht mit einem bogenförmigen Abschnitt ausgebildet sein. Durch eine mittlere bogenförmige Kontur lässt sich die Bodennaht besser an eine Kontur eines Filtergefäßes anpassen, das beispielsweise mehrere Ablauföffnungen besitzt, die über ein Trennelement separiert sind. Das Trennelement kann im oberen Bereich ebenfalls bogenförmig ausgebildet sein, so dass ein Formschluss zwischen Bodennaht und dem Trennelement hergestellt werden kann.

Der Winkel einer seitlichen Naht oder Faltkante zu der benachbarten Bodennaht ist vorzugsweise kleiner 130°, insbesondere kleiner 120°, und somit kleiner als bei einem Filterpapiereinsatz mit horizontaler Bodennaht. Die Bodennaht weist zwei winklige Abschnitte auf, die in einem Winkel kleiner 160°, insbesondere kleiner 150°, zueinander ausgerichtet sind. Die beiden winkligen Abschnitte können beispielsweise in einem Bereich zwischen 100 bis 160°, insbesondere 120° bis 150°, angeordnet sein.

Erfindungsgemäß wird auch ein Filtergefäß mit einem Filterpapiereinsatz bereitgestellt. Das Filtergefäß kann vorzugsweise zwei Ablauföffnungen aufweisen, die zwei Abläufen des Filterpapiereinsatzes zugeordnet sind, so dass jeder Ablauf oberhalb mindestens einer Ablauföffnung an dem Filtergefäß positioniert ist. Das Filtergefäß kann zwischen den Ablauföffnungen ein nach oben hervorstehendes Trennelement aufweisen, das beispielsweise an die Kontur der Bodennaht angepasst ist, so dass eine formschlüssige Abstützung des Filterpapiereinsatzes gewährleistet wird.

Die Erfindung wird nachfolgend anhand mehrerer Ausführungsbeispiele mit Bezug auf die beigefügten Zeichnungen näher erläutert. Es zeigen:
- Figuren 1A und 1B: ein erstes Ausführungsbeispiel eines erfindungsgemäßen Filterpapiereinsatzes;
- Figur 2: eine Ansicht des Filterpapiereinsatzes der Figur 1 in einem ersten Filtergefäß;
- Figur 3: eine Ansicht des Filterpapiereinsatzes der Figur 1 in einem zweiten Filtergefäß, und
- Figuren 4 bis 7: mehrere Ansichten modifizierter Ausführungsformen von Filterpapiereinsätzen.

Ein Filterpapiereinsatz 1 umfasst zwei Seitenwände 2 und 12, die in der zusammengelegten Position die gleiche Größe besitzen und in dem dargestellten Ausführungsbeispiel an einer Seite über eine Faltkante 3 und an der gegenüberliegenden Seite über eine Naht 4 miteinander verbunden sind. An einer Unterseite ist eine Bodennaht 5 ausgebildet, die an die Naht 4 anschließt und auf der gegenüberliegenden Seite an der Faltkante 3 endet. Es ist natürlich auch möglich, statt der Faltkante 3 zwei seitliche Nähte 4 vorzusehen. Der Filterpapiereinsatz 1 besteht aus einem faserigen Material auf Zellulosebasis und kann optional auch synthetische Materialien und ein Bindemittel enthalten. Die Nähte 4 und die Bodennaht 5 sind durch Prägen hergestellt, insbesondere durch Verpressen des Filterpapiers bei der Konfektionierung, insbesondere mit profilierten Walzen, die die Lagen aus Filterpapier dauerhalf miteinander verbinden. Die Breite der Bodennaht 5 kann abhängig vom verprägten Material und den Festigkeitsanforderungen gewählt werden, wobei zur vereinfachten Erläuterung die Breite der Bodennaht 5 vernachlässigt und diese geometrisch als Gerade, Bogen oder bogenförmiger Abschnitt beschrieben wird.

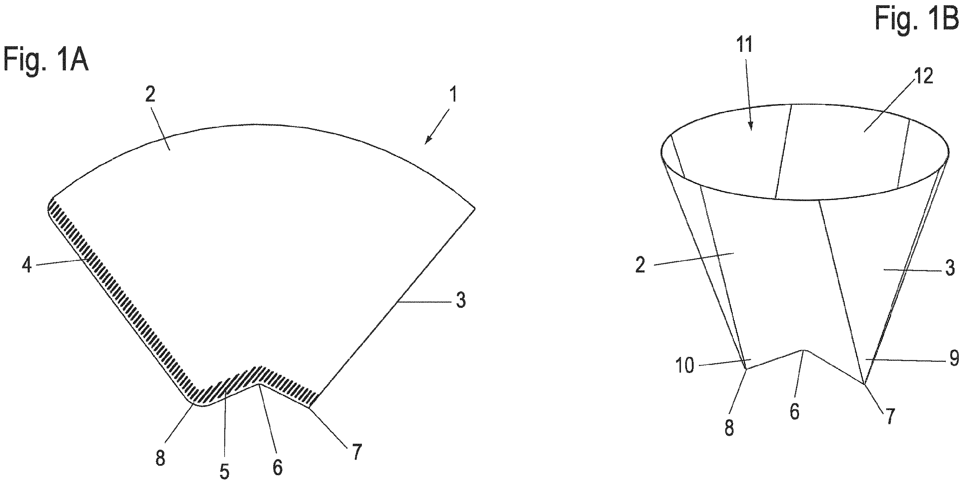

Auf der zur Bodennaht 5 gegenüberliegenden Seite ist eine Öffnung 11 zur Befüllung ausgebildet, so dass von oben Kaffeemehl oder ein anderes Extraktionsmaterial in den Filterpapiereinsatz 1 eingefüllt werden kann. In der geöffneten Position (Figur 1B) besitzt der Filterpapiereinsatz 1 eine im Wesentlichen kegelstumpfförmige Form.

Die Bodennaht 5 ist nicht als Gerade ausgebildet, sondern im Wesentlichen V-förmig durch zwei sich schneidende Geraden, die einen gleichschenkligen Winkel bilden, wobei eine nach oben ragenden mittleren Spitze 6 und auf beiden Seiten der Spitze 6 tiefer gelegenen Enden oder Spitzen 7 und 8 vorgesehen sind. Dadurch wird in der geöffneten Position des Filterpapiereinsatzes 1 oberhalb der Spitze 7 ein erster Ablauf 9 und oberhalb der Spitze 8 ein zweiter Ablauf 10 gebildet, die von einem höhergelegenen sattelförmigen Verbindungsstück mit der Spitze 6 voneinander beabstandet sind. Die Abläufe 9 und 10 sind im Wesentlichen trichterförmig ausgebildet.

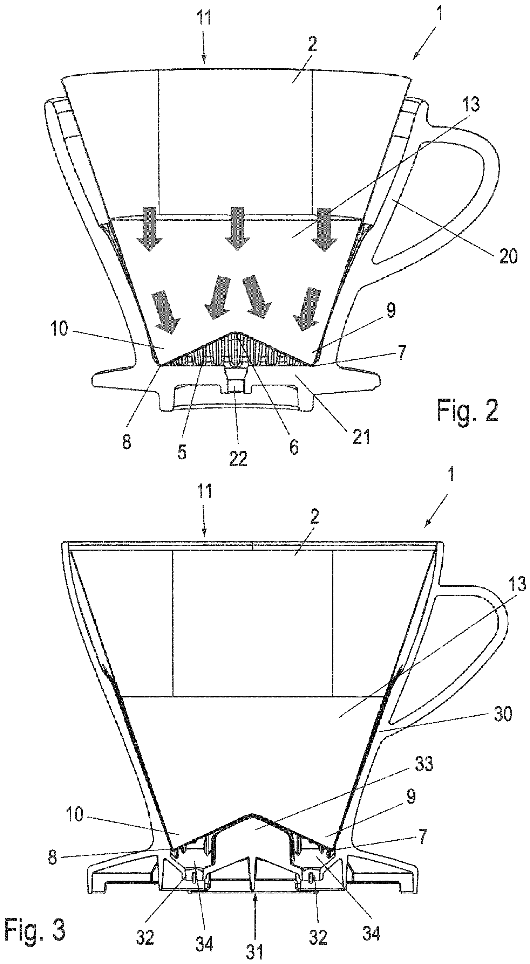

In Figur 2 ist der Filterpapiereinsatz 1 in einem Filtergefäß 20 dargestellt, das einen nach oben offenen Behälter zum Einfügen des Filterpapiereinsatzes 1 ausbildet, wobei ein ebener Boden 21 mit einer mittigen Ablauföffnung 22 vorgesehen ist. Solche Filtergefäße 20 können zum manuellen Aufbrühen, aber auch in handelsüblichen Kaffeemaschinen vorhanden sein.

Der Filterpapiereinsatz 1 ist mit Kaffeemehl 13 gefüllt und wird zum Brühen von Kaffee mit heißem Wasser durchströmt, wie dies durch die Pfeile symbolisch dargestellt ist. Durch die winkelförmig ausgebildete Bodennaht 5 strömt das heiße Wasser beim Extrahieren des Kaffeemehls 13 nicht vorrangig mittig zu der Ablauföffnung 22 an dem Filtergefäß 20, sondern durchströmt zu einem größeren Anteil zu den Abläufen 9 und 10 in dem Filterpapiereinsatz 1, die horizontal beabstandet zu der Ablauföffnung 22 angeordnet sind. Die Ablauföffnung 22 befindet sich im Wesentlichen unterhalb der nach oben ragenden Spitze 6, so dass die beiden Randbereiche des Filterpapiereinsatzes 1 stärker durchströmt werden, was zu einer gleichmäßigen Extraktion führt.

In Figur 3 ist der Filterpapiereinsatz 1 mit Kaffeemehl 13 in ein modifiziertes Filtergefäß 30 eingesetzt worden. Das Filtergefäß 30 besitzt einen nach oben offenen Behälter und einen Bodenbereich 31, an dem zwei voneinander beabstandete Ablauföffnungen 32 vorgesehen sind. Die beiden Ablauföffnungen 32 sind durch ein nach oben hervorstehendes Trennelement 33 voneinander getrennt, das eine Auflage für den Filterpapiereinsatz 1 ausbildet. Über beiden Ablauföffnungen 32 ist eine Ablaufkammer 34 vorgesehen, die unterhalb des Filterpapiereinsatzes 1 angeordnet ist. Bei diesem Filtergefäß 30 wird die Strömung durch die beiden Abläufe 9 und 10 in dem Filterpapiereinsatz 1 verstärkt, da jedem Ablauf 9 und 10 mindestens eine Ablauföffnung 32 an dem Filtergefäß 30 zugeordnet ist, d. h. die extrahierte Flüssigkeit strömt von dem jeweiligen Ablauf 9 oder 10 zu der Ablauföffnung 32. Dadurch werden die beiden Randbereiche oberhalb der Abläufe 9 und 10 stärker mit heißem Wasser durchströmt, selbst wenn das hieße Wasser in einem mittleren Bereich zugeführt wird.

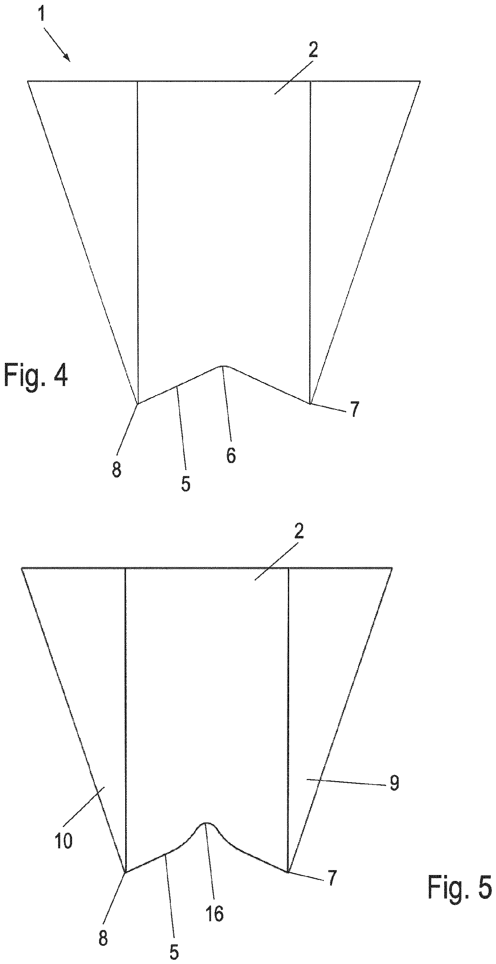

In Figur 4 ist der geöffnete Filterpapiereinsatz in einer Seitenansicht dargestellt, der eine im Wesentlichen W-förmige Außenkontur besitzt, die durch die Faltkante 3, Naht 4 und die Bodennaht 5 gebildet wird. Die Bodennaht 5 kann allerdings in der Geometrie verändert werden. Beispielsweise kann die winklige Bodennaht 5 in einem Scheitel statt einer Spitze einen Radius aufweisen, wie dies in Figur 5 dargestellt ist. Statt der Spitze 6 ist ein gerundeter Scheitel 16 vorgesehen, der einen gerundeten Übergang zwischen den beiden winkelförmigen Abschnitten der Bodennaht 5 bildet.

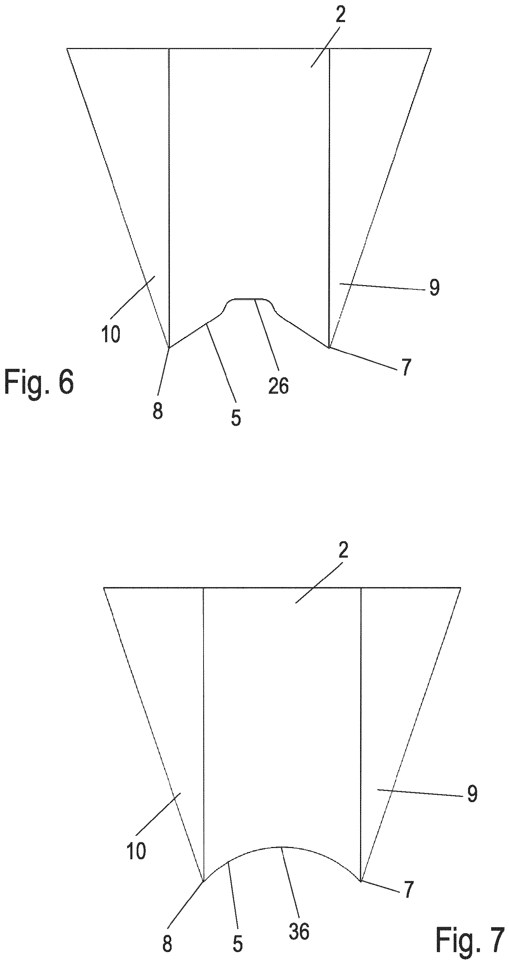

Alternativ kann gemäß Figur 6 die Bodennaht 5 zwei winklige Abschnitte aufweisen, die über einen rechteckförmigen Einschnitt 26 mit einem horizontalen Mittelabschnitt miteinander verbunden sind.

In Figur 7 ist ein nicht erfindungsgemäßer Filterpapiereinsatz 1 dargestellt, der eine modifizierte Bodennaht 5 aufweist, die einen Bogen 36 ausbildet, der sich von der Spitze 7 zu der Spitze 8 erstreckt. Die Bodennaht 5 kann dabei kreisförmig oder ellipsoid ausgestaltet sein. Die höchste Stelle der Bodennaht 5 kann zu dem tiefen Spitzen 7 und 8 in vertikale Richtung beispielsweise zwischen 5 mm bis 50 mm, insbesondere 10 mm bis 30 mm, beabstandet sein.

In dem dargestellten Ausführungsbeispiel besitzt der Filterpapiereinsatz 1 jeweils zwei Abläufe 9 und 10, die oberhalb der Spitzen 7 und 8 ausgebildet sind. Es ist natürlich auch möglich, mehr als zwei Abläufe 9 und 10 vorzusehen, beispielsweise wenn drei Spitzen oder mehr Spitzen an der Bodennaht 5 ausgebildet werden.

### Bezugszeichenliste

- 1: Filterpapiereinsatz
- 2: Seitenwand
- 3: Faltkante
- 4: Naht
- 5: Bodennaht
- 6: Spitze
- 7: Spitze
- 8: Spitze
- 9: Ablauf
- 10: Ablauf
- 11: Öffnung
- 12: Seitenwand
- 13: Kaffeemehl
- 16: Scheitel
- 20: Filtergefäß
- 21: Boden
- 22: Ablauföffnung
- 26: Einschnitt
- 30: Filtergefäß
- 31: Bodenbereich
- 32: Ablauföffnung
- 33: Trennelement
- 34: Ablaufkammer
- 36: Bogen

## Patentansprüche

1. Filterpapiereinsatz (1) zur Herstellung eines Brühgetränks, mit einer ersten Seitenwand (2) und einer zweiten Seitenwand (12), die an gegenüberliegenden Seiten jeweils durch eine Naht (4) oder eine Faltkante (3) miteinander verbunden sind, und die über eine Bodennaht (5) miteinander verbunden sind, wobei gegenüberliegend zu der Bodennaht (5) eine Öffnung (11) zur Befüllung des Filterpapiereinsatzes ausgebildet ist, wobei die Bodennaht (5) eine von einer Geraden abweichende Form besitzt, wobei an der Bodennaht (5) mindestens zwei tiefere Abläufe (9, 10) und ein die mindestens zwei Abläufe (9, 10) verbindendes höhergelegenes Verbindungsstück (6, 16, 26, 36) ausgebildet sind, wobei das Volumen im Bereich der Abläufe (9, 10) bei geöffnetem Filterpapiereinsatz im Wesentlichen trichterförmig ausgebildet ist, **dadurch gekennzeichnet, dass** die Bodennaht (5) zwei winklige Abschnitte aufweist, die einen Winkel kleiner 160° bilden.

2. Filterpapiereinsatz nach Anspruch 1, **dadurch gekennzeichnet, dass** der Verlauf der Bodennaht (5) zwei sich schneidenen Geraden entspricht und der Scheitelpunkt des von den Geraden gebildeten Winkels oberhalb der Spitzen liegt und die Abläufe (9, 10) nach unten spitz zulaufen.

3. Filterpapiereinsatz nach Anspruch 1 oder 2, **dadurch gekennzeichnet, dass** die Bodennaht (5) durch zwei sich schneidende Geraden gebildet ist und die Geraden einen gleichschenkligen Winkel bilden.

4. Filterpapiereinsatz nach einem der Ansprüche 1 bis 3, **dadurch gekennzeichnet, dass** die Bodennaht (5) mit einem bogenförmigen Abschnitt ausgebildet ist.

5. Filterpapiereinsatz nach Anspruch 4, **dadurch gekennzeichnet, dass** die Bodennaht (5) zwei sich schneidenden Geraden folgt, die in ihrem Scheitelpunkt durch eine Radius verbunden sind.

6. Filterpapiereinsatz nach Anspruch 1, **dadurch gekennzeichnet, dass** die Bodennaht (5) zwei sich schneidenden Geraden folgt, die in ihrem Scheitelpunkt durch eine dritte Gerade (26) verbunden sind.

7. Filterpapiereinsatz nach einem der vorhergehenden Ansprüche, **dadurch gekennzeichnet, dass** der Winkel einer seitlichen Naht (4) oder Faltkante (3) zu der benachbarten Bodennaht (5) kleiner 130°, vorzugsweise kleiner 120°, ist.

8. Filterpapiereinsatz nach einem der vorhergehenden Ansprüche, **dadurch gekennzeichnet, dass** die Bodennaht (5) zwei winklige Abschnitte aufweist, die einen Winkel kleiner 150° bilden.

9. Filtergefäß (20, 30) mit einem Filterpapiereinsatz (1) nach einem der vorhergehenden Ansprüche.

10. Filtergefäß nach Anspruch 9, **dadurch gekennzeichnet, dass** der Filterpapiereinsatz (1) mindestens zwei Abläufe (9, 10) aufweist, denen jeweils mindestens eine Ablauföffnung (32) an dem Filtergefäß (30) zugeordnet ist.

11. Filtergefäß nach Anspruch 10, **dadurch gekennzeichnet, dass** zwischen den beiden Abläufen (32) ein nach oben hervorstehendes Trennelement (33) vorgesehen ist.

## Claims

1. Filter paper insert (1) for producing a brewed beverage, with a first side wall (2) and a second side wall (12), which are connected together at opposite sides respectively by a seam (4) or a fold edge (3), and which are connected together by way of a base seam (5), wherein an opening (11) for filling the filter paper insert is formed opposite the base seam (5), wherein the base seam (5) has a shape departing from a straight line, wherein at least two deeper drains (9, 10) and a more highly positioned connecting piece (6, 16, 26, 36), which connects the at least two drains (9, 10), are formed at the base seam (5), wherein the volume in the region of the drains (9, 10) is formed to be substantially funnel-shaped when the filter paper insert is opened, **characterised in that** the base seam (5) has two angled sections which form an angle smaller than 160°.

2. Filter paper insert according to claim 1, **characterised in that** the course of the base seam (5) corresponds with two intersecting straight lines and the crest point of the angle formed by the straight lines lies above the tips and the drains (9, 10) run downwardly to a tip.

3. Filter paper insert according to claim 1 or 2, **characterised in that** the base seam (5) is formed by two intersecting straight lines and the straight lines form an equal angle.

4. Filter paper insert according to any one of claims 1 to 3, **characterised in that** the base seam (5) is formed by a curved section.

5. Filter paper insert according to claim 4, **characterised in that** the base seam (5) follows two intersecting straight lines which are connected at the crest point thereof by a radius.

6. Filter paper insert according to claim 1, **characterised in that** the base seam (5) follows two intersecting straight lines which are connected at the crest point thereof by a third straight line (26).

7. Filter paper insert according to any one of the preceding claims, **characterised in that** the angle of a lateral seam (4) or fold edge (3) with respect to the adjacent base seam (5) is smaller than 130°, preferably smaller than 120°.

8. Filter paper insert according to any one of the preceding claims, **characterised in that** the base seam (5) has two angled sections which form an angle smaller than 150°.

9. Filter vessel (20, 30) with a filter paper insert (1) according to any one of the preceding claims.

10. Filter vessel according to claim 9, **characterised in that** the filter paper insert (1) has at least two drains (9, 10), with each of which at least one drain opening (32) at the filter vessel (30) is associated.

11. Filter vessel according to claim 10, **characterised in that** an upwardly projecting separating element (33) is provided between the two drains (32).

## Revendications

1. Filtre en papier (1) pour préparer une infusion ayant une première paroi latérale (2) et une seconde paroi latérale (12) dont les côtés en regard sont reliés l'un à l'autre par une soudure (4) ou une arête pliée (3) et reliés l'un à l'autre par une soudure de fond (5), et
- à l'opposé de la soudure de fond (5), une ouverture (11) pour remplir le filtre en papier,
- la soudure de fond (5) ayant une forme qui s'écarte de celle d'une droite,
- la soudure de fond (5) formant au moins deux sorties (9, 10) plus basses et une liaison (6, 16, 26, 36) plus haute reliant les deux sorties (9, 10),
le volume dans la région des sorties (9, 10) est pratiquement en forme d'entonnoir lorsque le filtre en papier est ouvert,
filtre **caractérisé en ce que**
la soudure de fond (5) comprend deux segments anguleux qui forment entre eux un angle inférieur à 160°.

2. Filtre en papier selon la revendication 1,
**caractérisé en ce que**
le tracé de la soudure de fond (5) correspond à deux droites séquentes et le sommet de l'angle formé par les deux droites se situe au-dessus de la pointe et les sorties (9, 10) se terminent en bas par une pointe.

3. Filtre en papier selon la revendication 1 ou 2,
**caractérisé en ce que**
la soudure de fond (5) est formée par deux droites séquentes dont les droites forment un angle à branches égales.

4. Filtre en papier selon l'une des revendications 1 à 3,
**caractérisé en ce que**
la soudure de fond (5) a un segment de forme courbe.

5. Filtre en papier selon la revendication 4,
**caractérisé en ce que**
la soudure de fond (5) suit deux droites séquentes qui sont reliées par un rayon au point d'intersection.

6. Filtre en papier selon la revendication 1,
**caractérisé en ce que**
la soudure de fond (5) suit deux droites séquentes reliées à leur point d'intersection par une troisième droite (26).

7. Filtre en papier selon l'une des revendications précédentes,
**caractérisé en ce que**
l'angle d'une soudure latérale (4) ou d'une arête de pliage (3) par rapport à la soudure de fond voisine (5) est inférieur à 130°, de préférence il est inférieur à 120°.

8. Filtre en papier selon l'une des revendications précédentes,
**caractérisé en ce que**
la soudure de fond (5) comporte deux segments qui forment entre eux un angle inférieur à 150°.

9. Récipient de filtre (20, 30) comprenant un filtre en papier (1) selon l'une des revendications précédentes.

10. Récipient de filtre selon la revendication 9,
**caractérisé en ce que**
le filtre en papier (1) a au moins deux sorties (9, 10) et chacune de celles-ci est associée à un orifice de sortie (32) du récipient de filtre (30).

11. Récipient de filtre selon la revendication 10,
**caractérisé en ce que**
un élément séparateur (33), en saillie vers le haut est prévu entre les deux sorties (32).
